# EUROPÄISCHE PATENTANMELDUNG

(11) **EP 0 972 617 A2**
(43) Veröffentlichungstag der Anmeldung: **19.01.2000**
(21) Anmeldenummer: 99111103.0
(22) Anmeldetag: 08.06.1999
(51) Int. Cl.: B25J 19/00

(54) **Vorrichtung zur Kontrolle eines Bewegungsablaufes eines Roboters, Verwendung der Vorrichtung und Verfahren zum Einstellen der Vorrichtung**

(30) Priorität: 17.07.1998 DE 19832206
(71) Anmelder: Dr.Ing. h.c.F. Porsche Aktiengesellschaft, 70435 Stuttgart (DE)
(72) Erfinder: Papadopoulos, Sawwas, 70771 Leinfelden-Echterdingen (DE); Pilz, Manfred, 71522 Backnang (DE)

(57) **Zusammenfassung**

Die Erfindung betrifft eine Vorrichtung zur Kontrolle eines Rewegungsablaufes eines Roboters mit einem Kopf zur Aufnahme eine Werkzeuges. Um eine Vorrichtung zur Kontrolle eines Bewegungsablaufes eines Roboters zu schaffen, bei der eine Beschädigung des Werkstückes ausgeschlossen ist, wird vorgeschlagen, für einen Kopf des Roboters ein Aufsatzstück zum Austausch gegen das Werkzeug vorzusehen. An diesem Aufsatzstück sind zwei Vorrichtungen zur Erzeugung jeweils eines Laserstrahles angeordnet. Die zweite Vorrichtung ist dabei so ausgerichtet, daß der von ihr ausgehende Laserstrahl den ersten Laserstrahl in einem vorgegebenen Abstand zum Kopf des Roboters schneidet. Durch die Verwendung von zwei Laserstrahlen erfolgt die Kontrolle des Bewegungsablaufes anhand der von den Laserstrahlen erzeugten Bildpunkte und damit berührungsfrei.

## Beschreibung

Die Erfindung betrifft eine Vorrichtung zur Kontrolle eines Bewegungsablaufes eines Roboters nach dem Oberbegriff des Patentanspruches 1 sowie eine Verwendung der Vorrichtung und ein Verfahren zum Einstellen der Vorrichtung

Beispielsweise zur Abdichtung von Karosserienähten bei der Fertigung von Automobilkarosserien werden Roboter eingesetzt, die kopfseits eine Spritzdüse führen. Mit Hilfe der Spritzdüse wird zur Nahtabdichtung eine PVC-Masse selbsttätig aufgespritzt. Lage und Verlauf der abzudichtenden Karosserienähte lassen derzeit eine Berechnung des notwendigen Bewegungsablaufes nicht zu, so daß die Bewegung des Roboters durch ein Teach-In-Verfahren erfolgen muß.

Im Rahmen eines solchen Teach-In wurde bisher zur Kontrolle eines Bewegungsablaufes anstelle der Spritzdüse eine stabförmige Lehre definierter Länge aufgesetzt, die an verschiedene Punkte der Bewegungsbahn - hier der Karosserienaht - angefahren wurde, um auf diesem Wege die Bewegungsbahn mit Hilfe von Stützpunkten zu ermitteln. Zur Kontrolle der eingespeicherten Bewegungsbahn kann die Lehre nicht verwendet werden, da durch die Interpolation des Verlaufes der Bewegungsbahn zwischen den Stützstellen die Gefahr besteht, daß die Lehre auf der Karosserie aufsitzt. Stattdessen erfolgte bisher ein Trocken-Durchlauf mit eingesetzter Spritzdüse, jedoch ohne Zufuhr von Spritzmaterial. Hierbei war jedoch nur eine grobe optische Kontrolle der Bewegungsbahn möglich.

Gegenüber diesem Stand der Technik ist es Aufgabe der Erfindung, bei Vorrichtung zur Kontrolle eines Bewegungsablaufes eines Roboters zu schaffen, bei der eine Beschädigung des Werkstückes ausgeschlossen ist.

Diese Aufgabe wird erfindungsgemäß mit den Merkmalen des Patentanspruches 1 gelöst. Es wird vorgeschlagen, für einen Kopf des Roboters ein Aufsatzstück zum Austausch gegen das Werkzeug vorzusehen. An diesem Aufsatzstück sind zwei Vorrichtungen zur Erzeugung jeweils eines Laserstrahles angeordnet. Die zweite Vorrichtung ist dabei so ausgerichtet, daß der von ihr ausgehende Laserstrahl den ersten Laserstrahl in einem vorgegebenen Abstand zum Kopf des Roboters schneidet. Durch die Verwendung von zwei Laserstrahlen erfolgt die Kontrolle des Bewegungsablaufes anhand der von den Laserstrahlen erzeugten Bildpunkte und damit berührungsfrei. Neben einer generellen Ausrichtung des Kopfes des Roboters läßt sich bei dieser Anordnung auch der Abstand des Kopfes vom Werkstück genau kontrollieren; fallen die beiden Bildpunkte zusammen, so befindet sich der Kopf exakt im vorgegebenen Abstand zum Werkstück.

Vorteilhafte Weiterbildungen der Erfindung sind in den Unteransprüchen beschrieben.

Es wird vorgeschlagen, daß an der ersten Vorrichtung zur Erzeugung des ersten Laserstrahles Einstellmittel vorgesehen sind, mit denen die erste Laserstrahl achsparallel zu einer Achse des Werkzeuges ausgerichtet werden kann. Damit ist es möglich, bei der Kontrolle des Bewegungsablaufes zumindest die Ausrichtung der Werkzeugachse zu überprüfen, wenn - beispielsweise an unzugänglichen Stellen - der vorgegebene Abstand nicht erreicht werden kann.

Es wird ferner vorgeschlagen, die Vorrichtung zur Erzeugung der Laserstrahlen mit Halbleiter-Lasern und einer selbständigen Energieversorgung auszustatten. Eine derartige Vorrichtung ist in vorteilhafter Weise ohne Verbindung zu Versorgungseinrichtungen verwendbar, so daß am Kopf des Roboters für den Gebrauch dieser Vorrichtung keine zusätzlichen Maßnahmen erforderlich sind. Darüber hinaus sind derart ausgestattete Vorrichtungen zur Erzeugung eines Laserstrahles als sogenannte "Laserpointer" besonders preisgünstig erhältlich.

Die letzte Weiterbildung wie auch die vorgeschlagene Verwendung betrifft den Einsatz der Vorrichtung in Verbindung mit einer Spritzdüse. Bei Spritzdüsen, insbesondere zum Auftragen von Klebmassen und Abdichtmassen, ist neben der Ausrichtung der Strahlachse (die hier die Werkzeugachse bildet) der Abstand zwischen dem Austritt des aufzutragenden Materials aus der Spritzdüse und dem Auftreffen auf das Werkstück von großer Bedeutung für die Qualität des Auftrages. An unzugänglichen Stellen, beispielsweise in Karosserietaschen von Fahrzeugkarosserien, ist es bei Abstrichen an die Qualität des Auftrages auch möglich, nur die Ausrichtung des Strahles zu kontrollieren, um so auch bei einem nicht optimalen Spritzabstand einen automatischen Auftrag des eingesetzten Materiales zu ermöglichen.

Mit dem erfindungsgemäßen Verfahren schließlich kann die erfindungsgemäße Vorrichtung besonders einfach eingestellt werden. Als Einstellhilfe dient dabei eine ortsfest angeordnete Öffnung, die einen Durchmesser aufweist, der nur wenig größer als der Durchmesser des Spritzstrahles ist. Zum Einstellen wird der Kopf des Roboters zunächst in eine Position gebracht, in der ein von der Spritzdüse ausgehende Materialstrahl genau durch die Öffnung hindurch trifft. Nachfolgend wird die Spritzdüse gegen das Aufsatzstück der erfindungsgemäßen Vorrichtung ausgetauscht und die beiden Laserstrahlen werden so ausgerichtet, daß beide Laserstrahlen durch die Öffnung hindurchtreten.

Die Erfindung ist nachstehend anhand des in den Figuren dargestellten Ausführungsbeispieles näher erläutert. Es zeigen:
- Figur 1: einen Kopf eines Roboters mit einer aufgesetzten Spritzdüse,
- Figur 2: den Kopf des Roboters nach Figur 1, jedoch mit der erfindungsgemäßen Vorrichtung anstelle der Spritzdüse,
- Figur 3: den Kopf des Roboters mit der erfindungsgemäßen Vorrichtung bei der Anwendung zum Verfahren zum Einstellen der erfindungsgemäßen Vorrichtung und
- Figur 4: eine Ansicht einer Vorrichtung zur Erzeugung eines Laserstrahles.

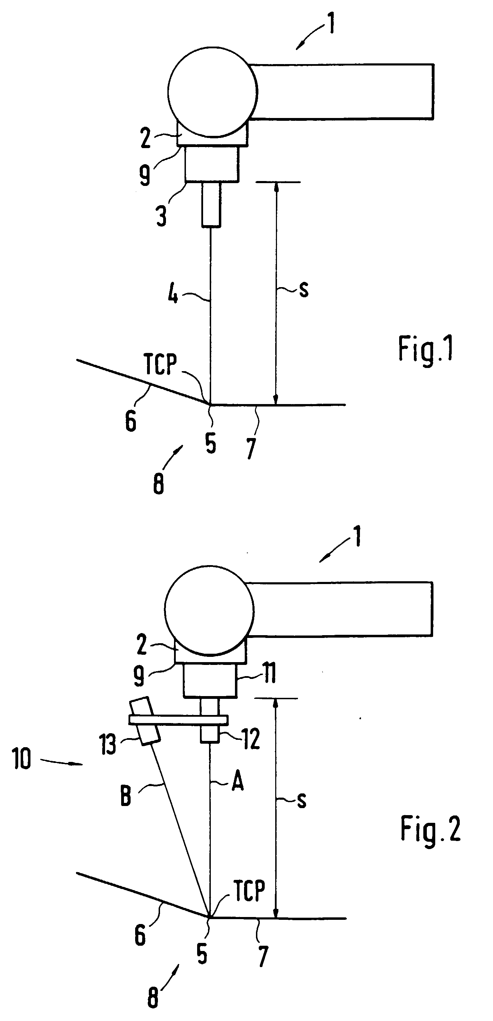

Figur 1 zeigt einen teilweise dargestellten Roboter 1, an dessen Kopf 2 als Werkzeug eine Spritzdüse 3 gehalten ist. Aus der Spritzdüse 3 wird ein Materialstrahl 4 abgegeben, mit dessen Hilfe eine Abdichtmasse auf eine Karosserienaht 5, die zwischen zwei Blechen 6, 7 einer Fahrzeugkarosserie 8 gebildet ist, aufgetragen wird. Der Auftreffpunkt des Materialstrahles 4 ist mit TCP bezeichnet, wobei der Punkt TCP im Abstand s von einer Anlagefläche 9 des Kopfes 2 liegt.

Bei der Darstellung nach Figur 2 ist am Kopf 2 des Roboters 1 anstelle der Spritzdüse 3 eine Kontrollvorrichtung 10 befestigt. Die Kontrollvorrichtung 10 besteht aus einem am Kopf 2 befestigten Aufsatzstück 11, an dem zwei Vorrichtungen 12, 13 zur Erzeugung eines ersten Laserstrahles A und eines zweiten Laserstrahles B angeordnet sind. Die Vorrichtungen 12, 13 sind so ausgerichtet, daß sich die aus ihnen austretenden Laserstrahlen A, B im Punkt TCP schneiden. Darüber hinaus ist der erste Laserstrahl A so ausgerichtet, daß er mit dem Materialstrahl 4 bei aufgesetzter Spritzdüse 3 fluchtet. Die zweite Vorrichtung 13 zur Erzeugung des zweiten Laserstrahles B ist hingegen seitlich und beabstandet zur ersten Vorrichtung 12 zur Erzeugung des ersten Laserstrahles A am Aufsatzstück 11 angeordnet.

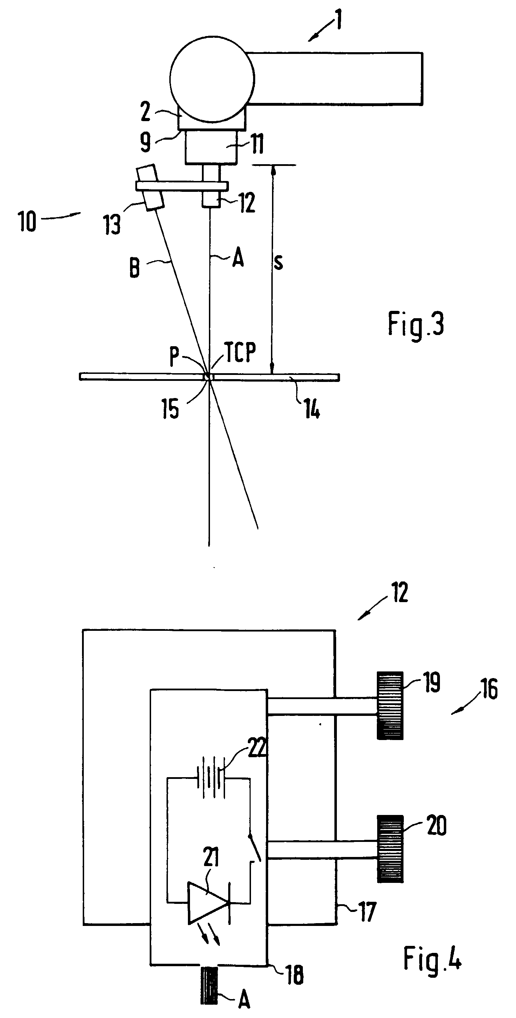

Zum Ausrichten der Einstellvorrichtung 10 wird der Kopf 2 des Roboters 1, wie in Figur 3 dargestellt, über eine ortsfest angeordnete Blende 14 gefahren, die eine Öffnung 15 aufweist. Bei aufgesetzter Spritzdüse 3 wird der Kopf 2 so eingestellt, daß der (in Figur 3 nicht dargestellte) Materialstrahl 4 durch die Öffnung 15 hindurchtritt. Die Öffnung 15 weist dabei einen Durchmesser auf, der nur wenig größer als der Durchmesser des Materialstrahles 4 ist. Der Abstand S des Kopfes 2 zur Blende 14 ist dabei so gewählt, daß die Öffnung 15 genau im Punkt TCP liegt, das heißt der Abstand s dem für den Materialauftrag vorgegebenen Abstand entspricht.

Nachdem die Spritzdüse 3 gegen die Kontrollrichtung 10 ausgetauscht ist, wird zunächst der erste Laserstrahl A so eingestellt, daß er durch die Öffnung 15 hindurchtritt. Danach wird der zweite Laserstrahl B ebenfalls so eingestellt, daß er durch die Öffnung 15 hindurchtritt. Durch diese Maßnahme ist sichergestellt, daß sich ein Kreuzungspunkt P der Laserstrahlen A, B genau im Bereich der Öffnung 15 zu liegen kommt und sich damit mit dem Punkt TCP deckt.

Um die Lage der Laserstrahlen A, B einstellen zu können, sind an den Vorrichtungen 12, 13 zur Erzeugung der Laserstrahlen A, B Einstellvorrichtungen 16 vorgesehen, wie dies in Figur 4 am Beispiel der ersten Vorrichtung 12 zur Erzeugung des ersten Laserstrahles A dargestellt ist. Die Vorrichtung 12 besteht dabei aus einem Gehäuse 17, in dem einstellbar eine Laserquelle 18 gehalten ist. Die Laserquelle 18 ist über die Einstellvorrichtung 16 im Gehäuse 17 einstellbar gehalten; die Einstellvorrichtung 16 ist hier beispielhaft in Form zweier Einstellschrauben 18, 19 dargestellt.

Im dargestellten Beispiel ist die Laserquelle 18 mit einem Halbleiterlaser 21 versehen, der über eine innerhalb der Laserquelle 18 angeordnete Batterie 22 betrieben wird. Derartige Laserquellen sind im Handel als "Laserpointer" erhältlich.

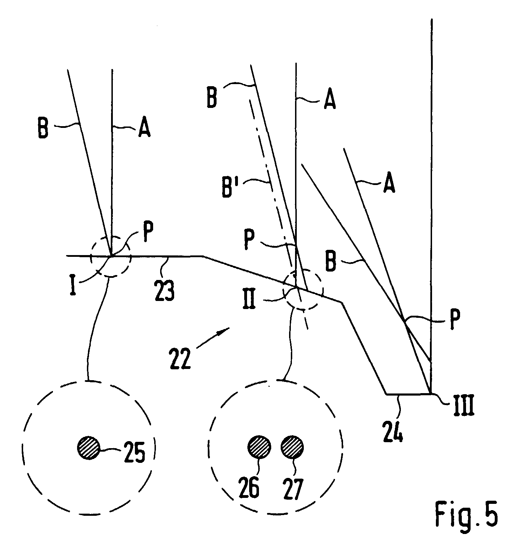

Figur 5 zeigt skizzenhaft die Anwendung der Kontrollvorrichtung 10 beim Einlernen einer nicht dargestellten Steuerung des Roboters 1. Soweit möglich, soll der Bewegungsablauf des Roboters so programmiert werden, daß der Materialstrahl 4 stehts im Punkt TCP auf das Werkstück auftrifft. Das in Figur 5 gezeigte Werkstück 22 weist neben einem ebenen Abschnitt 23 auch eine Tasche 24 auf, in der ebenfalls Material aufgetragen werden muß. Zum Einlernen des Roboters 1 werden verschiedene Punkte auf der Oberfläche des Werkstückes 22 mit Hilfe der Kontrollvorrichtung 10 angefahren, die später als Stützpunkte für den Bewegungsablauf des Roboters 1 dienen. Im Punkt 1 nach Figur 5 ist der Roboter 1 richtig programmiert, denn der Kreuzungspunkt P der Laserstrahlen A, B befindet sich genau auf der Oberfläche des Werkstückes 22. Dies wird dadurch deutlich, daß die Laserstrahlen A und B in einem einzigen Bildpunkt 25 auf der Oberfläche des Werkstückes 22 zusammentreffen.

Im Punkt II befindet sich der Kreuzungspunkt P oberhalb der Oberfläche des Werkstückes 22, so daß ein vom ersten Laserstrahl A gebildeter erster Bildpunkt 26 und ein vom zweiten Laserstrahl B gebildeter zweiter Bildpunkt 27 nicht zur Deckung kommen. Durch Verändern des Programmablaufes muß daher an dieser Stelle der Kopf 2 soweit abgesenkt werden, bis der zweite Laserstrahl die Position B' einnimmt und die Bildpunkte 26 und 27 zur Deckung kommen.

Der Punkt III liegt im Bereich der Tasche 24, bei der aufgrund der räumlichen Gegebenheiten der Kopf 2 des Roboters 1 den Abstand s nicht erreichen kann. Hier erfolgt die Kontrolle der Programmierung daher nur mit Hilfe des Laserstrahles A, der hier den Punkt III treffen muß.

Die dargestellte Vorgehensweise ist sowohl beim ersten Einlernen des Roboters 1 wie auch bei der Kontrolle der Programmierung möglich.

## Patentansprüche

1. Vorrichtung zur Kontrolle eines Bewegungsablaufes eines Roboters (1) mit einem Kopf (2) zur Aufnahme eine Werkzeuges (3), **dadurch gekennzeichnet**, daß ein Aufsatzstück (11) zum Austausch gegen das Werkzeug (3) vorgesehen ist, wobei am Aufsatzstück eine erste Vorrichtung (12) zur Erzeugung eines ersten Laserstrahles (A) und eine zweite Vorrichtung (13) zur Erzeugung eines zweiten Laserstrahles (B) angeordnet sind und die zweite Vorrichtung (13) so ausgerichtet ist, daß sich der zweite Laserstrahl (B) den ersten Laserstrahl (A) in einem vorgegebenen Abstand (S) zum Kopf schneidet.

2. Vorrichtung nach Anspruch 1, **dadurch gekennzeichnet**, daß an der ersten Vorrichtung (12) zur Erzeugung des ersten Laserstrahles (A) Einstellmitel (16) zur achsparallelen Ausrichtung des ersten Laserstrahles (A) parallel zu einer Achse (4) des Werkzeuges (3) vorgesehen sind.

3. Vorrichtung nach Anspruch 1 oder 2, **dadurch gekennzeichnet**, daß das Werkzeug (3) eine Spritzdüse ist.

4. Vorrichtung nach Anspruch 1, 2 oder 3, **dadurch gekennzeichnet**, daß die Vorrichtungen (12, 13) zur Erzeugung der Laserstrahlen mit Halbleiter-Lasern und einer selbstständigen Energieversorgung (22) ausgestattet sind.

5. Verwendung der Vorrichtung nach einem der vorstehenden Ansprüche für ein Spritzwerkzeug (3) zum Auftragen von Klebemassen und Abdichtmassen an einer Fahrzeugkarosserie (8).

6. Verfahren zum Einstellen der Vorrichtung nach einem der Ansprüche 1 bis 4, **gekennzeichnet** durch die Schritte
- Verfahren des Kopfes (2) in eine Einstellposition, in der das Werkzeug (3) in bezug auf eine ortsfeste Öffnung (15) ausgerichtet ist,
- Austauschen des Werkzeuges (3) gegen das Aufsatzstück (11)
- Ausrichten der Vorrichtungen (12, 13) zur Erzeugung der Laserstrahlen (A, B) so, daß beide Laserstrahlen durch die Öffnung (15) hindurchtreten.
